(19) **Europäisches Patentamt**
**European Patent Office**
**Office européen des brevets**

(11) **EP 1 866 714 B1**

(12) **EUROPÄISCHE PATENTSCHRIFT**

(45) Veröffentlichungstag und Bekanntmachung des Hinweises auf die Patenterteilung:
**31.03.2010 Patentblatt 2010/13**

(21) Anmeldenummer: **05823489.9**

(22) Anmeldetag: **30.12.2005**

(51) Int Cl.:
*G05B 19/048* *(2006.01)*

(86) Internationale Anmeldenummer:
**PCT/EP2005/057233**

(87) Internationale Veröffentlichungsnummer:
**WO 2006/092182 (08.09.2006 Gazette 2006/36)**

(54) **VERFAHREN UND VORRICHTUNG ZUR ÜBERWACHUNG EINER PROZESSAUSFÜHRUNG**

METHOD AND DEVICE FOR MONITORING A PROCESS ACTION

PROCEDE ET DISPOSITIF PERMETTANT DE SURVEILLER UNE EXECUTION DE PROCESSUS

(84) Benannte Vertragsstaaten:
**DE ES FR GB**

(30) Priorität: **28.02.2005 DE 102005008975**

(43) Veröffentlichungstag der Anmeldung:
**19.12.2007 Patentblatt 2007/51**

(73) Patentinhaber: **ROBERT BOSCH GMBH**
**70442 Stuttgart (DE)**

(72) Erfinder:
• **KARNER, Rüdiger**
**70806 Kornwestheim (DE)**
• **JANSEN, Alexander**
**70197 Stuttgart (DE)**

(56) Entgegenhaltungen:
**EP-A- 0 663 324     US-A- 5 359 515**
**US-A- 5 677 838**

**Beschreibung**

STAND DER TECHNIK

Die vorliegende Erfindung betrifft ein Verfahren zur Überwachung einer Prozessausführung und eine Vorrichtung zur Durchführung des erfindungsgemäßen Verfahrens.

Obwohl die vorliegende Erfindung anhand einer Überwachung einer Prozesssteuerung durch ein Echtzeitsystem beschrieben wird, ist die vorliegende Erfindung nicht darauf beschränkt, sondern betrifft allgemein Verfahren zur Überwachung von Prozessen.

Vielfältige Steuerungsverfahren und deren entsprechende Vorrichtungen sehen vor, regelmäßig Signale von Sensoren zu erfassen, die erfassten Signale auszuwerten und ansprechend auf die Auswertung entsprechende Steuersignale zu generieren. Ein Beispiel ist ein Steuerungssystem zur Auslösung von Airbags, welches regelmäßig einen Prozess mit den folgenden Teilschritten ausführt: Erfassen der Signale von Sensoren und Verarbeiten der Signale und Generieren eines Steuersignals für den Airbag.

Eine Fehlfunktion des Echtzeitsystems oder der ausgeführten Prozesse können zu einem Auslösen des Airbags führen. Dies wird dadurch vermieden, dass die Ausführung der Prozesse durch das Echtzeitsystem überwacht werden und bei Erfassung einer Fehlfunktion eine Ausgabe eines Steuersignals an den Airbag gesperrt wird.

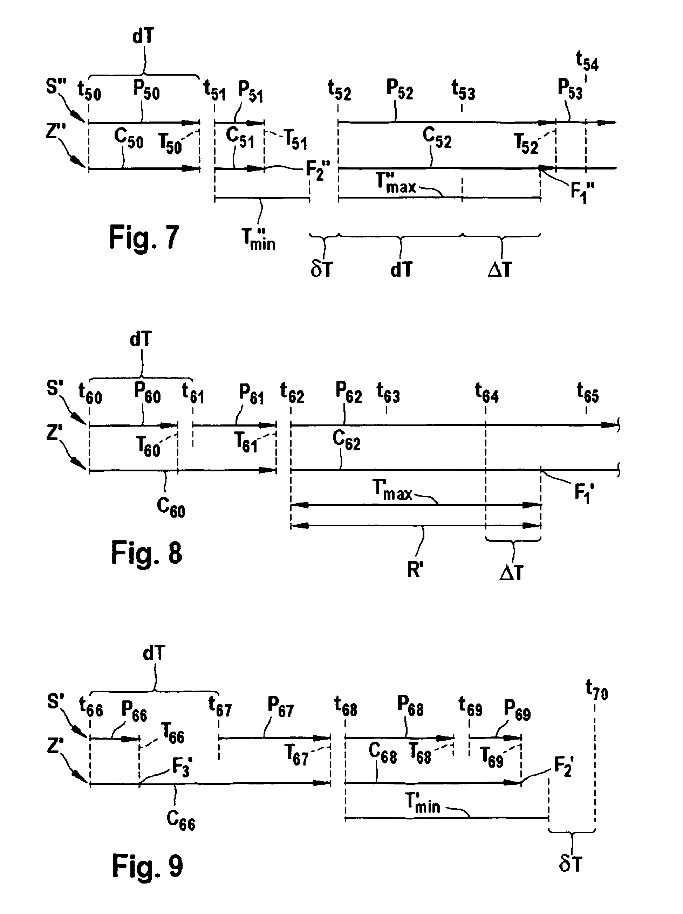

Ein Verfahren zur Erläuterung einer der Erfindung zugrunde liegenden Problematik ist in Fig. 8 dargestellt. Prozessen $P_{60}$, $P_{61}$, $P_{62}$ werden durch ein Echtzeitsystem S' entsprechend dem Zeitraster zu den Zeitpunkten $t_{61}$, $t_{62}$ mit dem Zeitintervall dT gestartet. Zwei Prozesse $P_{60}$, $P_{61}$ werden jeweils paarweise zusammengefasst, und beim Starten des ersten Prozesses $P_{60}$ der beiden Prozesse wird ein Zähler Z' gestartet, und beim Beenden des zweiten Prozesses $P_{61}$ wird der Zähler Z' angehalten. Der Zählerstand $C_{60}$ ist somit ein Maß für die gesamte Ausführungsdauer der beiden Prozesse $P_{60}$, $P_{61}$. Überschreitet der Zählerstand $C_{62}$ einen durch eine maximale Zeitspannung $T_{Max}$ vorgegebenen Wert, wird eine Überlauffehlermeldung $F'_1$ ausgegeben. Tritt ein Fehlverhalten während eines ersten Prozesses $P_{62}$ eines Paars auf, so vergeht ab dem Startzeitpunkt $t_{62}$ dieses Prozesses $P_{62}$ die maximale Zeitspanne $T'_{Max}$, bis das Fehlersignal $F'_1$ ausgegeben wird. Dies ist unerwünscht lange, insbesondere da die maximale Zeitspanne $T'_{Max}$ länger als zwei Zeitintervalle dT des Ausführungsrasters sein muss. Zudem lassen sich nicht in allen Fällen zu kurze Ausführungszeiten eines Prozesses erfassen, welche ebenfalls auf ein Fehlverhalten des Echtzeitsystems oder der Prozesse hinweisen. In Fig. 9 sind sowohl der Prozess $P_{66}$ als auch der Prozess $P_{69}$ untypisch kurz. Ist der zu kurze Prozess der zweite Prozess eines Paars $P_{68}$, $P_{69}$, so erfasst der Zähler Z' einen Zählerstand $C_{68}$, welcher kürzer ist als durch die minimale

Zeitspannung $T'_{min}$ vorgegeben, und in Folge wird ein Unterlauf-Fehlersignal $F'_2$ ausgegeben. Ist jedoch der zu kurze Prozess $P_{66}$ der erste eines Paars $P_{66}$, $P_{67}$, wird aufgrund des Starts des zweiten Prozesses entsprechend dem Zeitraster zu dem Zeitpunkt $t_{67}$ kein Zählerstand $C_{66}$ erfasst, welcher kürzer ist als die entsprechende minimale Zeitspanne $T'_{min}$.

Aus EP 0 663 324 A1 ist es bekannt, auf einem Mikrocomputers eines Airbagsystems mehrere Programme zu laden, wobei eine erste Routine interruptgesteuert gestartet wird, um ein Sensorsignal zu verarbeiten, ob Personenschutzmittel anzusteuern sind oder nicht. Eine weitere Routine 7b wird für Hintergrundjobs gestartet und von einem Überwachungszähler 7c überwacht. Die Routine 7a muss einen Watch-Dog-Timer bedienen, und zwar rechtzeitig, ansonsten kommt es zu einer Resistierung des Mikrocomputers.

VORTEILE DER ERFINDUNG

Die Erfindung schafft ein Verfahren mit den Merkmalen des Anspruchs 1. Das erfindungsgemäße Verfahren erfasst jeden Unter- und Überlauf, wobei eine Reaktionszeit gemessen ab einem Start eines fehlerhaften Prozesses bis zur Ausgabe eines Fehlersignals kurz ist.

Das erfindungsgemäße Verfahren zur Überwachung einer Prozessausführung von mehreren sequenziell ausgeführten Prozessen startet zyklisch permutierend einen von mehreren Zeitmessern, wenn einer der Prozesse gestartet wird, und gibt ein erstes Fehlersignal aus, wenn eine durch einen der Zeitmesser erfasste Zeitspanne eine vorbestimmte maximale Zeitspanne überschreitet.

Ein Vorteil der vorliegenden Erfindung liegt darin, dass ein Fehlverhalten eines Prozesses, d.h. eine untypisch lange Ausführungsdauer, einen ersten Zeitmesser zum Überlaufen bringt, welcher vor dem Prozess durch einen vorhergehenden Prozess gestartet wurde. Daher ist die Reaktionszeit gemessen von dem Start eines Prozesses bis zum Erkennen des Fehlverhaltens des Prozesses kürzer als die maximale Zeitspanne.

Gegenüber der Möglichkeit, einen Zeitmesser durch einen Prozess zu starten und durch denselben Prozess zu stoppen, erfordert dass die mittlere maximale Zeitspanne länger gewählt werden muss als in dem erfindungsgemäßen Verfahren.

Der Grund liegt in typischen Ausreißern der Ausführungsdauer, welche vereinzelt auftreten und nicht zu einem Ausgeben der Fehlermeldung führen soll. Daher muss die maximale Zeitspanne in dem Fall, dass der Zeitmesser durch denselben Prozess gestartet und gestoppt wird bzw. von dem unmittelbar nachfolgenden Prozess neu gestartet wird, größer als die Ausführungsdauer der typischen Ausreißer sein. In dem erfindungsgemäßen Verfahren wird angenommen, dass N-1 Prozesse standardmäßig ausgeführt werden und höchstens ein einzelner Prozess ein Ausreißer ist, wobei N die Zahl der Zeitgeber bezeichnet. Die Überlänge des Ausreißers verteilt sich somit auf N Prozesse, und die mittlere maximale Zeitspanne bezogen auf einen einzelnen Prozess ist kürzer als in dem vorgenannten nicht erfindungsgemäßen Verfahren.

Erfindungsgemäß wird beim Beenden eines Prozesses eine erfasste Zeitspanne des Zeitmessers ausgelesen, welcher durch den nächsten auszuführenden Prozess neu gestartet wird, und ein zweites Fehlersignal ausgegeben, wenn die Zeitspanne eine vorbestimmte minimale Zeitspanne unterschreitet. Dieses Verfahren ermöglicht es vorteilhafterweise, ein Fehlverhalten der Prozessausführung mit untypisch kurzer Ausführungsdauer eines Prozesse zu erkennen.

In den Unteransprüchen finden sich vorteilhafte Weiterbildungen und Verbesserungen des im Patentanspruch 1 angegebenen Verfahrens.

Gemäß einer Weiterbildung wird einem gestarteten Prozess ein Prüfdatum zur Verarbeitung übermittelt und bei Beendigung des Prozesses ansprechend auf eine Abweichung des verarbeiteten Prüfdatums von einem Sollwert ein drittes Fehlersignal ausgegeben. In einer Weiterbildung ist ein Prozess aus Teilprozessen zusammengesetzt, und mindestens ein Teilprozess führt eine Operation auf dem Prüfdatum aus, welche die Ausführung dieses Teilprozesses nachvollziehbar durch das verarbeitete Prüfdatum bestätigt. Auf diese Weise lässt sich erkennen, ob alle relevanten Teilprozesse ausgeführt wurden, in denen das verarbeitete Prüfdatum mit dem Sollwert verglichen wird. Eine weitere Ausgestaltung sieht vor, dass mindestens zwei Teilprozesse zueinander nicht-kommutative Operationen auf dem Datum ausführen, was darin resultiert, dass die Ausführung dieser Teilprozesse in der richtigen Reihenfolge durch das verarbeitete Prüfdatum bestätigbar ist. Zueinander nicht kommutative Operationen zeichnen sich dadurch aus, dass eine Operation in verschiedener Reihenfolge auf dem Prüfdatum für die meisten Prüfdaten zu verschiedenen verarbeiteten Prüfdaten führt.

Gemäß einer bevorzugten Weiterbildung erfolgt der Start zweier unmittelbar aufeinander folgender Prozesse mit einem minimalen Zeitintervall. Dies ermöglicht die regelmäßige Ausführung von Prozessen.

Gemäß einer Weiterbildung ist die maximale Zeitspanne größer als ein erstes Produkt des minimalen Zeitintervalls und der Anzahl der Zeitmesser und kleiner als die Summe des ersten Produkts und des minimalen Zeitintervalls. Gemäß einer weiteren Weiterbildung ist die minimale Zeitspanne größer oder gleich einem zweiten Produkt des minimalen Zeitintervalls und der um eins verringerten Anzahl der Zeitmesser.

Gemäß einer Ausführungsform der vorliegenden Erfindung weist eine Vorrichtung zur Durchführung des Verfahrens eine Überwachungseinrichtung auf, welche mit einer Prozessorvorrichtung verbunden ist, welche die Prozesse ausfahrt, um ein Startsignal von der Steuerungsvorrichtung zu empfangen, wenn ein Prozess gestartet wird, und eingerichtet ist eine übermittelte Zeitspanne mit der maximalen Zeitspanne zu vergleichen und bei Überschreitung ein Fehlersignal über eine Schnittstelle auszugeben; und mindestens zwei Zeitmesser aufweist, welche mit einem Multiplexer der Überwachungseinrichtung verbunden sind, um zyklisch durch ein Rücksetzsignal neu gestartet werden zu können, und mit einem Eingang der Überwachungseinrichtung verbunden sind, um eine erfasste Zeitspanne an die Überwachungseinrichtung zu übermitteln.

Gemäß einer Weiterbildung weisen die Zeitmesser regressive getaktete Zähler auf, welche beim Neustarten auf einen Wert gesetzt werden, welcher der vorbestimmten maximalen Zeitspanne entspricht. Gemäß einer weiteren Weiterbildung ist der Zeitmesser derart eingerichtet, dass die erfasste Zeitspanne durch die Überwachungseinrichtung auslesbar ist und der Zeitmesser durch ein Steuersignal anhaltbar eingerichtet.

Gemäß einer weiteren Weiterbildung weist die Überwachungseinrichtung eine Vergleichseinrichtung auf, welche den Sollwert mit einem durch den Prozess verarbeiteten Prüfdatum vergleicht und bei Abweichung ein drittes Fehlersignal ausgibt.

Ausführungsbeispiele der Erfindung sowie vorteilhafte Weiterbildungen sind in den Figuren der Zeichnungen dargestellt und in der nachfolgenden Beschreibung näher erläutert.

ZEICHNUNGEN

In den Figuren zeigen:

Fig. 1 eine schematische Darstellung einer Ausführungsform als Ablaufdiagramm;

Fig. 2 eine schematische Darstellung der Ausführungsform als Flussdiagramm;

Fig. 3 eine schematische Darstellung der Ausführungsform zur Erläuterung eines Überlaufs;

Fig. 4 eine schematische Darstellung der Ausführungsform bei einem Unterlauf;

Fig. 5 ein Flussdiagramm einer Ausführungsform mit einem mehrschrittigen Prozess;

Fig. 6 ein schematisches Blockdiagramm einer Ausführungsform der erfindungsgemäßen Vorrichtung;

Fig. 7 ein Ablaufdiagramm zur Erläuterung einer Problematik einer Ausführungsform der vorliegenden Erfindung;

Fig. 8 und 9 Ablaufdiagramme zur Erläuterung der zugrunde liegenden Problematik des erfin- dungsgemäßen Verfahrens:

BESCHREIBUNG DER AUSFÜHRUNGSBEISPIELE

In den Figuren bezeichnen gleiche Bezugszeichen gleiche oder funktionsgleiche Komponenten, soweit nichts Gegenteiliges angegeben ist.

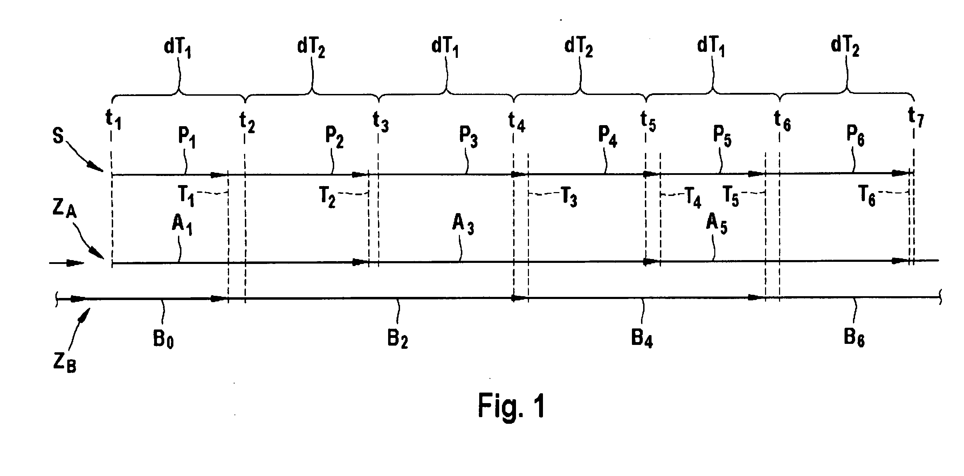

In Fig. 1 ist die Ausführung von mehreren einzelnen Prozessen $P_1$, $P_2$, ... durch ein Prozessorsystem S in sequenzieller Reihenfolge dargestellt. Das Prozessorsystem S versucht jeden der Prozesse möglichst zu vorgegebenen Zeitpunkten $t_1$, $t_2$, ... zu starten, sofern nicht noch ein vorhergehender Prozess $P_3$, $P_4$ zu den vorgegebenen Zeitpunkten $t_4$, $t_5$ aktiv ist. In diesem Fall startet das Prozessorsystem S den Prozess $P_4$, $P_5$ unmittelbar zu dem Zeitpunkt $T_3$, $T_4$, zu welchem der Prozess $P_3$, $P_4$ beendet wird. Das beschriebene Prozessorsystem und die Ausführung der Prozesse ist typisch für ein Echtzeitbetriebssystem und einer zugehörigen Vorrichtung, welche häufig in Steuerungssystemen eingesetzt werden. Meistens ist das Zeitintervall $dT_1$, $dT_2$ zwischen zwei aufeinander folgenden Zeitpunkt $t_1$, $t_2$, ... äquidistant. In einer anderen Ausführungsform können die Zeitintervalle $dT_1$, $dT_2$, wie in Fig. 1 dargestellt, verschieden sein und Paare oder längere Sequenzen bilden, welche sich periodisch wiederholen. Für nachfolgende Beschreibungen wird davon ausgegangen, dass die Zeitintervalle $dT_1$, $dT_2$ äquidistant sind, sofern es nicht anders angegeben ist.

Bei der Prozessausführmg durch das Prozessorsystem S kann es zu vielfältigen Fehlfunktionen kommen. Daher ist erwünscht, Indikatoren für ein Fehlverhalten des Prozessorsystems S zu erhalten. Ein sehr einfaches und dennoch wirksames Verfahren ist die Ausführungsdauer der Prozesse $P_1$, $P_2$, ... zu überwachen. In Fig. 1 ist dazu eine Ausführungsform der vorliegenden Erfindung dargestellt, welche zur Überwachung zwei Zeitmesser $Z_A$, $Z_B$ verwendet. Die beiden Zeitmesser $Z_A$, $Z_B$ werden abwechselnd neu gestartet, wenn nahezu zeitgleich durch das Prozessorsystem S ein neuer Prozess $P_1$, $P_2$, ... gestartet wird. Somit wird jeder Zeitmesser $Z_A$, $Z_B$ nur durch jeden zweiten Prozess neu gestartet. Unter Neustarten wird herbei verstanden, dass der Zeitmesser auf einen Startwert zurückgesetzt wird und neu zu messen beginnt. Der erste Zeitmesser $Z_A$ wird zusammen mit dem ersten Prozess $P_1$ zu dem vorgegebenen Zeitpunkt $t_1$ gestartet. Ein Neustart des ersten Zeitmessers $Z_A$ erfolgt, wenn der dritte Prozess $P_3$ zu dem vorgegebenen Zeitpunkt $t_3$ gestartet wird. Der zweite Zeitmesser $Z_B$ wird nicht durch den Start des ersten Prozesses $P_1$ und des dritten Prozesses $P_3$ beeinflusst, sondern zusammen mit dem zwischen den vorgenannten Prozessen gestarteten zweiten Prozess $P_2$ neu gestartet.

Die Zeitspanne zwischen zwei Neustarts eines der Zeitmesser $Z_A$, $Z_B$ wird vor einem Neustart des entsprechenden Zeitmessers $Z_A$ ausgelesen. In der in Fig. 1 dargestellten Ausführungsform wird ein Zeitmesser $Z_A$ angehalten, wenn der zweite Prozess $P_2$ zu dem Zeitpunkt $T_2$ beendet wird. Die von dem Zeitmesser $Z_A$ auf diese Weise erfasste Zeitspanne $A_1$ entspricht somit der Zeitspanne zwischen dem Start des ersten Prozesses $P_1$ und dem Ende des zweiten Prozesses $P_2$. In dem dargestellten Beispiel wird der zweite Prozess $P_2$ vor dem dritten Zeitpunkt $t_3$ beendet, an welchem der dritte Prozess $P_3$ gestartet wird, so dass das Auslesen des ersten Zeitmessers $Z_A$ zu dem Zeitpunkt $T_2$ nicht mit dem Neustarten des ersten Zeitmessers $Z_A$ zu dem vorgegebenen Zeitpunkt $t_3$ zusammenfällt.

Eine weitere Ausführungsform sieht vor, den Zeitmesser $Z_A$ bei Beendigung eines Prozesses nur anzuhalten und das Auslesen dieses Zeitmessers vorzunehmen, bevor er neu gestartet wird. Im Fall des vierten Prozesses $P_4$ fallen der Zeitpunkt des Auslesen bzw. Anhaltens des ersten Zeitmessers $Z_A$ mit dem Neustarten des ersten Zeitmessers $Z_A$ gezwungenermaßen zusammen, da der fünfte Prozess $P_5$ unmittelbar bei Beendigung des vierten Prozesses $P_4$ gestartet wird. Das Verhalten des zweiten Zeitgebers $Z_B$ entspricht dem des ersten Zeitmessers $Z_A$, mit der Ausnahme, dass das Auslesen und Neustarten des zweiten Zeitmessers $Z_B$ um die Ausführungszeit eines Prozess versetzt ist.

Dieses Schema lässt sich auf N Zeitmesser $Z_A$, $Z_B$, ... $Z_N$ verallgemeinern, wobei diese Zeitmesser dann in zyklisch permutierender Reihenfolge nacheinander gestartet werden, also nach dem N-ten Zeitmesser $P_N$ wird wieder der erste Zeitmesser $P_1$ neu gestartet. Also der erste Zeitmesser $Z_A$ wird mit den Prozessen $P_1$, $P_{N+1}$, $P_{2N+1}$, ...; der zweite Zeitmesser $Z_B$ mit den Prozessen $P_2$, $P_{N+2}$, $P_{2N+2}$, ...; und der k-te Zeitmesser $Z_N$ wird mit den Prozessen $P_k$, $P_{N+k}$, $P_{2N+k}$ neu gestartet. Das Auslesen bzw. Anhalten eines k-ten Zeitmessers $Z_k$ erfolgt entsprechend der Ausführungsform von Fig. 1 mit Beendigung des Prozesses $P_{k-1}$, $P_{N+k-1}$, $P_{2N+k-1}$ welche dem Prozess $P_k$, $P_{N+k}$, $P_{2N+k}$ vorausgehend gestartet wurden, mit welchem der k-te Zeitgeber $Z_k$ neu gestartet wird.

In Fig. 1 sind Prozesse $P_3$ dargestellt, deren Ausführungsdauer länger ist als das Zeitintervall $dT_1$, welches für die Prozesse zur Verfügung gestellt wird. Eine Überschreitung des Zeitintervalls $dT_1$, $dT_2$ tritt vereinzelt auf, wenn ein Prozess $P_3$ eine größere Anzahl an Berechnungen oder Einzelschritten auszuführen hat als sonst üblich. Dies kann z.B. in einem Airbag Steuersystem auftreten, welches im Regelfall alle Sensoren abfragt und auf der Basis weniger Berechnungen erfassen kann, dass keine Situation vorliegt, welche eine Auslösung des Airbags erfordern würde. Vereinzelt melden jedoch die Sensoren erhöhte Beschleunigungswerte, welche auf einen Unfall hindeuten, und entsprechend muss das Prozessorsystem S eine größere Anzahl an Berechnungen durchführen, um diese Signale zu verifizieren und/oder den Airbag auszulösen. Da diese Situationen und damit die langen Ausführungsdauem der Prozesse sehr selten sind, werden die Zeitintervalle $dT_1$, $dT_2$ so gewählt, dass innerhalb dieser Zeitintervalle $dT_1$, $dT_2$ Prozesse $P_1$, $P_2$, ... mit einer normalen Ausführungsdauer ausgeführt werden können und zugleich einzelne Ausreißer über eine längere Zeitspanne oder mehrere Prozesse ausgeglichen werden, so dass nachfolgende Prozesse wieder zeitplangemäß ausgeführt werden, wie in dem Beispiel des dritten Prozesses $P_3$ mit Überlänge und dem nachfolgenden sechsten Prozess $P_6$, welcher zeitplangemäß zu dem Zeitpunkt $t_6$ ausgeführt wird, dargestellt ist.

Aus der vorhergehenden Beschreibung ergibt sich, dass nicht jede Überschreitung eines Zeitintervalls $dT_1$, $dT_2$ durch die Ausführung eines Prozesses auf einem Fehlverhalten des Prozessorsystems S bzw. des ausgeführten Prozesses $P_3$ basiert, sondern auch selten auftretenden Ausreißern der Ausführungsdauer entsprechen kann. Dazu wird ein Zeitpuffer $\Delta T$ eingeführt, welcher der zu erwartenden Überlänge der Ausreißer entspricht. Da anzunehmen ist, dass ein typischer Ausreißer sehr selten ist und somit bei 2 bzw. N aufeinander folgenden Prozessen $P_1$, $P_2$, ... nur einmal auftritt, wird eine maximale Zeitspanne $T_{Max}$ definiert, welche um den Zeitpuffer $\Delta T$ länger ist, als das 2-fache bzw. N-fache des Zeitintervalls dT. Allgemein ist die maximale Zeitspanne $T_{Max}$ um den Zeitpuffer länger als die Summe über alle Zeitintervalle $dT_1$, $dT_2$ zwischen zwei zeitplangemäßen Starts eines Zeitmessers.

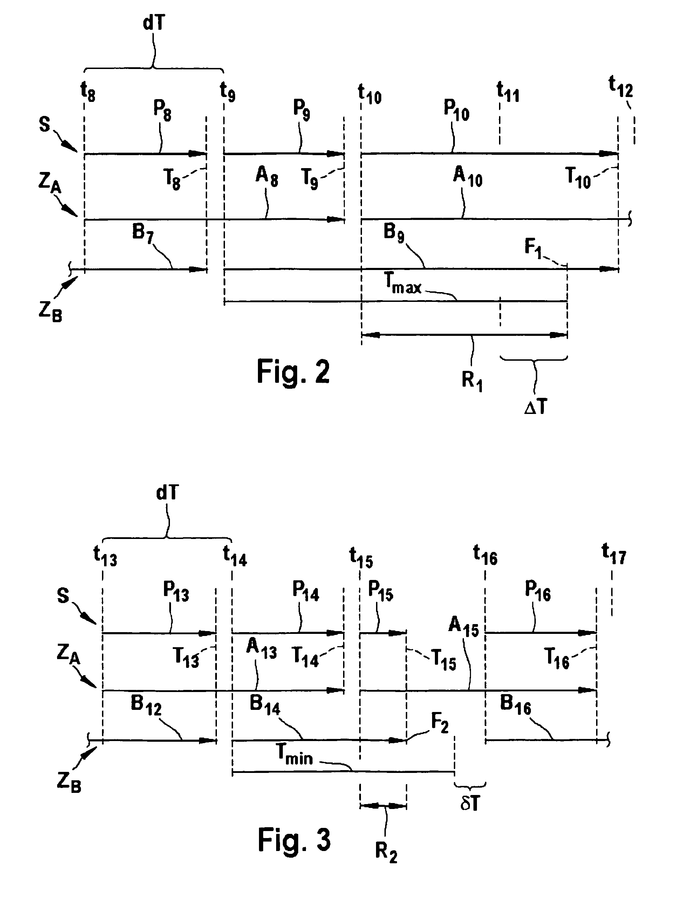

Mit Bezug auf Fig. 2 wird beispielhaft erläutert, wie mit einer vorgegebenen maximalen Zeitspanne $T_{Max}$ und durch die Zeitmesser $Z_A$, $Z_B$ erfassten Zeitspannen ein Fehlverhalten in der Ausführung von Prozessen erkannt wird. Der achte und neunte Prozesse $P_8$, $P_9$ werden ohne Fehlverhalten durch die Prozessoreinrichtung S ausgeführt. Analog zu den Erläuterungen von Fig. 1 wird mit dem Start des neunten Prozesses $P_9$ der zweite Zeitmesser $Z_B$ gestartet und die Zeitspanne $B_9$ durch den zweiten Zeitmesser $Z_B$ erfasste. Zeitplangemäß zu dem Zeitpunkt $t_{10}$ wird der zehnte Prozess $P_{10}$ gestartet, wobei während der Ausführung ein Fehlverhalten auftritt, z.B. eine Endlosschleife innerhalb des zehnten Prozesses $P_{10}$ oder ein Hardware-Defekt des Prozessorsystems S, was zu einer untypisch langen Ausführungszeit des zehnten Prozessors $P_{10}$ führt. Mit dem zehnten Prozess $P_{10}$ wurde auch der erste Zeitmesser $Z_A$ gestartet. Sowohl der erste wie auch der zweite Zeitmesser $Z_A$, $Z_B$ überwachen die von ihnen erfassten Zeitspannen $A_{10}$ bzw. $B_9$. Die Überwachung der Zeitmesser $Z_A$, $Z_B$ kann auch von einer externen Einheit übernommen werden. Überschreitet eine der erfassten Zeitspannen $A_{10}$, $B_9$ die vorgegebene maximale Zeitspanne $T_{Max}$, wird ein Fehlersignal generiert. Vorzugsweise erfolgt die Generierung des Signals zeitnah zu dem Zeitpunkt F, des Beginns der Zeitüberschreitung der maximalen Zeitspanne $T_{Max}$. Sofern die maximalen Zeitspannen $T_{Max}$ für die beiden Zeitmesser $Z_A$, $Z_B$ nicht sehr unterschiedlich gewählt sind, im Regelfall sind sie gleich, überschreitet die erfasste Zeitspanne $B_9$ des zweiten Zeitmessers $Z_B$ zuerst die maximale Zeitspanne $T_{Max}$, da dieser zweite Zeitmesser $Z_B$ bereits vor dem zehnten Prozess $P_{10}$ gestartet wurde. Daraus ergibt sich, dass die Reaktionszeit $R_1$ gemessen von Beginn des Starts des zehnten Prozesses $P_{10}$, bei welchem ein Fehlverhalten auftritt, bis zum Erkennen des Fehlverhaltens zum Zeitpunkt $F_1$ um das einfache bzw. N-1-fache des Zeitintervalls dT kürzer ist als die maximale Zeitspanne $T_{Max}$. Die sich ergebende Reaktionszeit $R_1$ ist somit die Summe eines Zeitintervalls dT und des Zeitpuffers $\Delta T$. Somit kann schnell auf ein Fehlverhalten des Prozessorsystems S bzw. des ausgeführten Prozesses reagiert werden. Eine Ausführungsform der vorliegenden Erfindung sieht vor, in diesem Fall bei einem Airbag-Steuersystem eine Endstufe zu sperren, so dass ein möglicherweise fehlerhaft generiertes Steuersignal der Airbag-Steuereinrichtung einen Airbag nicht auslösen kann.

Durch einen Vergleich mit Fig. 7 wird offensichtlich, dass das erfindungsgemäße Verfahren genauso schnell auf ein Fehlverhalten eines Prozesses reagiert, wie wenn ein Überwachungssystem mit einem einzigen Zeitmesser Z" verwendet wird, welcher mit jedem Prozess $P_{50}$, $P_{51}$, ... neu gestartet wird. Während des Prozesses $P_{52}$ kommt es zu einem Fehlverhalten in dem Prozessorsystem S", was durch Überschreiten einer maximalen Zeitspanne $T"_{Max}$ zu dem Zeitpunkt $F"_1$ festgestellt wird, wobei die maximale Zeitspane $T"_{Max}$ der Summe des Zeitintervalls dT und dem Zeitpuffer AT entspricht. Die Reaktionszeit $R_1$ der vorhergehend beschriebenen Ausführungsform und dieses Systems sind somit gleich.

Ein weiteres Kennzeichen für eine Fehlfunktion in einem Prozessorsystem S ist, wenn Prozesse viel schneller als üblich beendet werden. Mit Bezug auf Fig. 3 wird beschrieben, wie eine solche Fehlfunktion mit Hilfe einer minimalen Zeitspanne $T_{min}$ festgestellt wird. Der dreizehnte und vierzehnte Prozess $P_{13}$, $P_{14}$ werden zeitplanmäßig ausgeführt und beendet. Der zweite Zeitgeber $Z_B$ wird zusammen mit dem vierzehnten Prozess $P_{14}$ gestartet. Der fünfzehnte Prozess $P_{15}$ wird zusammen mit dem ersten Zeitmesser $Z_A$ gestartet. Während des fünfzehnten Prozesses $P_{15}$ ergibt sich eine Fehlfunktion, welche z.B. die Ausführung des fünfzehnten Prozesses $P_{15}$ vorzeitig beendet. Bei Ende dieses fünfzehnten Prozesses wird standardmäßig der zweite Zeitmesser $Z_B$ angehalten und die durch ihn erfasste Zeitspanne $B_{14}$ ausgelesen. Diese Zeitspanne $B_{14}$ wird mit der minimalen Zeitspanne $T_{min}$ verglichen. Unterschreitet die erfasste Zeitspanne $B_{14}$ die minimale Zeitspanne $T_{min}$, wird ein zweites Fehlersignal ausgegeben. Die Ausgabe des Fehlersignals erfolgt vorzugsweise zu dem Zeitpunkt $F_2$ zeitnah zu dem Auslesen des zweiten Zeitmessers $Z_B$. Die minimale Zeitspanne $T_{min}$ ist um eine Zeitdifferenz $\delta T$ kürzer als das Zweifache des Zeitintervalls dT. Sämtliche Überlegungen, welche zuvor in Bezug auf den Zeitpuffer $\Delta T$ für die maximale Zeitspanne $T_{Max}$ erläutert wurden, lassen sich auch auf die minimale Zeitspanne $T_{min}$ anwenden mit dem Unterschied, dass die minimale Zeitspanne $T_{min}$ um die Zeitdifferenz $\delta T$ kürzer ist als das Zweifache bzw. das N-fache des Zeitintervalls dT.

Neben der Überwachung der Ausführung der Prozesse mittels derer Ausführungszeit wird eine zusätzliche Diagnosemöglichkeit durch die mit Bezug auf Fig.

4 dargestellte Ausführungsform erreicht. Wird in einem Prozessorsystem S ein erster Prozess $P_1$ gestartet 200, übermittelt die Prozessorsteuerung S ein Startsignal 100 an eine Überwachungseinrichtung 2. Daraufhin startet die Überwachungseinrichtung 2 einen ersten Zeitmesser $Z_A$, 250, wie in den vorherigen Ausführungsbeispielen beschrieben. Zusätzlich wird ein Prüfdatum $X_1$ ausgewählt 251 und mit einem Signal 101 an das Prozessorsystem S übermittelt. In dem ersten Prozess $P_1$ wird mindestens eine Operation f auf das Prüfdatum $X_1$ angewandt 201 und somit ein verarbeitetes Prüfdatum $Y_1$ erhalten. Bei Beendigung 202 des ersten Prozesses $P_1$ wird ein Stoppsignal 102 von dem Prozessorsystem S an die Überwachungseinrichtung 2 übermittelt. In der Überwachungseinrichtung 2 wird daraufhin der zweite Zeitmesser $Z_B$ angehalten 252, überprüft, ob die von dem zweiten Zeitmesser $Z_B$ erfasste Zeitspanne B die minimale Zeitspanne $T_{min}$ unterschreitet 254, und falls ja, eine Fehlermeldung ausgegeben 259, wie bereits in vorhergehenden Ausführungsformen beschrieben. Zudem wird das verarbeitete Prüfdatum $Y_1$, welches mit dem Stoppsignal 102 übermittelt wurde, mit einem Sollwert $Y_{Soll1}$ verglichen. Bei einer Abweichung wird ebenfalls eine Fehlermeldung ausgegeben. Zudem wird überprüft, ob eine erfasste Zeitspanne nicht bereits die maximale Zeitspanne $T_{Max}$ überschritten hat 258, was ebenfalls, wie bereits erläutert, zur Ausgabe einer Fehlermeldung führt.

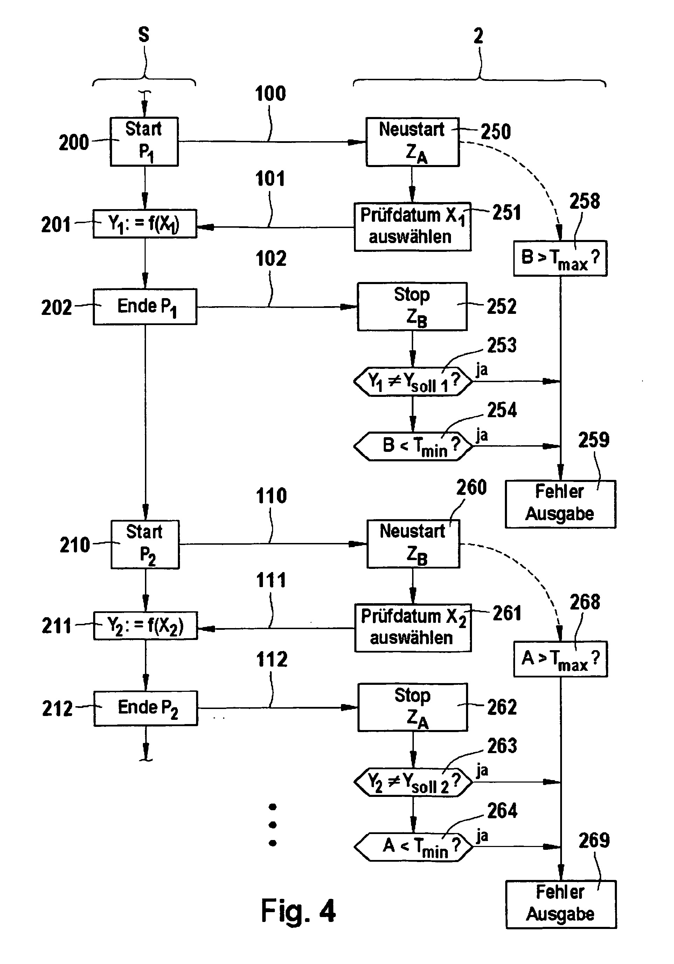

Bei Start eines weiteren Prozesses werden die zuvor beschriebenen Schritte wiederholt, wie aus Fig. 4 zu entnehmen ist, wobei entsprechend der andere Zeitmesser gestartet bzw. angehalten wird. Durch Verwendung verschiedener Prüfdaten $X_1$, $X_2$, ... kann sichergestellt werden, dass die Operationen auf den Prüfdaten $X_1$, $X_2$, ... ausgeführt werden und der Prozess nicht ein einzelnes vormals bearbeitetes Prüfdatum $Y_1$, $Y_2$, ... nur aus einer Speicherzelle des Prozessorsystems S ausliest. Die Prüfdaten $X_1$, $X_2$, ... können zyklisch wieder verwendet werden. Zu jedem Prüfdatum $X_1$, $X_2$, ... sind die entsprechenden Sollwerte $Y_{Soll1}$, $Y_{Soll2}$, ... in der Überwachungseinrichtung 2 vorzuhalten.

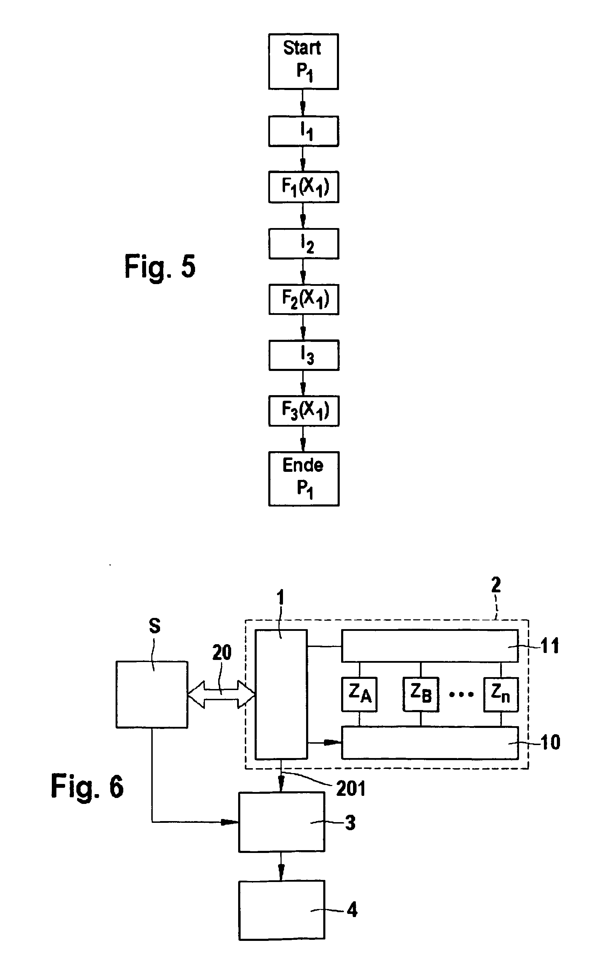

Mit Bezug auf Fig. 5 werden zwei Anwendungen eines Prüfdatums beschrieben. Ein einzelner Prozess lässt sich in der Regel in mehrere Teilprozesse untergliedern. Z.B. bei einer Airbag-Steuerung wären dies auslesende Sensoren $I_1$, Auswerten der Sensorwerte $I_2$ und Generieren eines Steuerungssignals für das Airbag-System $I_3$. Hierbei ist es unabdingbar für die korrekte Ausführung des Prozesses $P_1$, dass alle Teilprozesse $I_1$, $I_2$, $I_3$ ausgeführt werden. Hierzu führt jeder Teilprozess $I_1$, $I_2$, $I_3$ nachfolgend eine Operation F auf dem Prüfdatum $X_1$ aus. Drei sehr einfache Operationen $F_1$, $F_2$, $F_3$ wären, das erste, das zweite bzw. das dritte Bit des Prüfdatums $X_1$ zu negieren. Durch Vergleich mit dem Sollwert kann somit unmittelbar festgestellt werden, ob alle drei Operationen ausgeführt wurden oder eine und in diesem Fall sogar welche der Operationen nicht ausgeführt wurde. Wichtig für die korrekte Ausführung des Prozesses $P_1$

ist auch die Reihenfolge der Ausführungen der Teilprozesse $I_1$, $I_2$, $I_3$. Dies kann dadurch erreicht werden, dass die Operationen $F_1$, $F_2$, $F_3$ zueinander oder zumindestens teilweise nicht kommutativ sind. Dadurch ergibt sich, dass bei nicht korrekter Reihenfolge der Ausführung sich ein von dem Sollwert unterscheidendes verarbeitetes Prüfdatum Y ergibt. Es sei beispielsweise das Prüfdatum $X_1$ fünf und die Operation $F_1$ die Multiplikation mit zwei und die Operation $F_2$ die Addition mit drei, ergibt sich bei korrekter Reihenfolge als Ergebnis dreizehn, was in diesem Fall der Sollwert ist, und bei vertauschter Reihenfolge sechzehn, was nicht dem Sollwert entspricht.

Mit Bezug auf Fig. 6 wird eine Überwachungseinrichtung 2 beschrieben, welche eine Schnittstelle und ein Verarbeitungsmodul 1 aufweist, welches mit einem Prozessorsystem S über eine Daten- und Steuerungsleitung 20 verbunden ist und mit einer Endstufe 3 eines Airbag-Systems 4 zur Übermittlung von einem Unterdrückungssignal 201 verbunden ist. Das Unterdrückungssignal 201 wird durch die Verarbeitungseinrichtung 1 generiert, wenn ein Fehlverhalten der Prozessausführung durch das Prozessorsystem S mit einem der zuvor beschriebenen Verfahren festgestellt wird. Die Verarbeitungseinrichtung 1 kann direkt oder über eine Multiplexereinrichtung 10 eine Vielzahl von Zeitmessern $Z_A$, $Z_B$, $Z_N$ neu starten und gegebenenfalls auch anhalten. In einer bevorzugten Ausführungsform sind die Zeitmesser $Z_A$, $Z_B$, $Z_N$ regressive Zähler, welche im Takt mit einem Zeitgeber rückwärts zählen. Erreicht ein Zählerstand einer der Zähler den Wert 0, so löst dies einen Interrupt in einer Zelleausleseeinrichtung 11 aus. Beim Neustarten der Zähler $Z_A$, $Z_B$, $Z_N$ werden diese auf einen Wert gesetzt, welcher der maximalen Zeitspanne entspricht Daher wird das Auslösen des zuvor genannten Interrupts als Fehler in dem Prozessorsystem S bei der Prozessausführung interpretiert. In einer weiteren Variante kann die Zählerausleseeinrichtung 11 den Zählerstand der Zähler bzw. Zeitmessers $Z_A$, $Z_B$, $Z_N$ auslesen und diesen Wert an die Verarbeitungseinrichtung 1 auf Anforderung übergeben. Die Ausleseeinrichtung 11 kann ebenso mit einem Multiplexer verbunden sein, welcher so eingerichtet ist, dass nur der Zeitmesser ausgelesen wird, welcher am längsten läuft. Dies lässt sich durch einen einfachen zyklischen Multiplexer realisieren.

Die Steuerungseinrichtung S gibt an die Endstufe 3 ein Steuersignal aus, wenn das Airbag-System 4 ausgelöst werden soll. Bei einem Erkennen eines Fehlers der Prozessausführung durch die Verarbeitungseinrichtung 1 wird die Endstufe 3 gesperrt und somit ein Auslösen des Airbag-Systems 4 verhindert.

Ein weiterer Vorteil der beschriebenen Ausführungsformen wird nachfolgend ausgeführt. Die Ausreißer erfordern wie beschrieben die Einführung des Zeitpuffers AT. Der Zeitpuffer $\Delta T$ verteilt sich bei einem System mit N Zeitmessern $Z_1$, $Z_2$, ... effektiv auf N Prozesse $P_1$, $P_2$ ... Somit ist die mittlere Ausführungsdauer für jeden einzelnen Prozess genauer festgelegt als bei nur einem einzigen Zeitmesser Z" und trotzdem führen vereinzelte Ausreißer nicht zur Ausgabe eines Fehlersignal.

**Patentansprüche**

1. Verfahren zur Überwachung eines Prozessorsystems (S), welches mehrere Prozesse ($P_1$, $P_2$, ...) ausgeführt, **dadurch gekennzeichnet, dass** ein Prozess ($P_1$, $P_2$, ...) gestartet wird nachdem ein vorhergehender Prozess ($P_1$, $P_2$, ...) beendet ist, dass zyklisch permutierend einer von mindestens zwei Zeitmessern ($Z_A$, $Z_B$, $Z_N$) neu gestartet wird, wenn einer der Prozesse ($P_1$, $P_2$, ...) gestartet wird; und ein erstes Fehlersignal ausgegeben wird, wenn eine durch einen der Zeitmesser ($Z_A$, $Z_B$, $Z_N$) erfasste Zeitspanne (A1, A3, ..., B0, B2, ...), eine vorbestimmte maximale Zeitspanne ($T_{Max}$) überschreitet, dass beim Beenden eines Prozesses ($P_1$, $P_2$, ...) eine erfasste Zeitspanne (A1, A3, ..., B0, B2, ...) des Zeitmessers ($Z_A$, $Z_B$, $Z_N$) ausgelesen wird, welcher durch den nächsten auszuführenden Prozess ($P_1$, $P_2$, ...) neu gestartet wird; und ein zweites Fehlersignal ausgegeben wird, wenn die erfasste Zeitspanne (A1, A3, A5, ..., B0, B2, B4, ...) eine vorbestimmte minimale Zeitspanne ($T_{min}$) unterschreitet.

2. Verfahren nach Anspruch 1, **dadurch gekennzeichnet, dass** einem gestarteten Prozess ($P_1$, $P_2$, ...) ein Prüfdatum ($X_1$, $X_2$) zur Verarbeitung übermittelt wird; bei Beendigung des Prozesses ($P_1$, $P_2$, ...) ansprechend auf eine Abweichung des verarbeiteten Prüfdatums ($Y_1$, $Y_2$) von einem Soll-Wert ($V_{Sol11}$, $Y_{Sol12}$) ein drittes Fehlersignal ausgegeben wird.

3. Verfahren nach Anspruch 2, **dadurch gekennzeichnet, dass** ein Prozess ($P_1$, $P_2$, ...) aus Teilprozessen ($I_1$. $I_2$, $I_3$) zusammengesetzt ist und mindestens ein Teilprozess ($I_1$, $I_2$, $I_3$) eine Operation auf dem Prüfdatum ($X_1$, $X_2$) ausführt, welche die Ausführung dieses Teilprozesses ($I_1$, $I_2$, $I_3$) nachvollziehbar durch das verarbeitete Prüfdatum ($Y_1$, $Y_2$) bestätigt.

4. Verfahren nach mindestens einem der Ansprüche 2 oder 3, wobei mindestens zwei Teilprozesse ($I_1$, $I_2$, $I_3$) zueinander nicht-kommutative Operationen ($F_1$, $F_2$, $F_3$) auf dem Prüfdatum ($X_1$, $X_2$) ausführen, so dass die Ausführung dieser Teilprozesse in der richtigen Reihenfolge durch das verarbeitete Datum bestätigbar ist.

5. Verfahren nach mindestens einem der vorhergehenden Ansprüche, **dadurch gekennzeichnet, dass** der Start von einem der Prozesse ($P_1$, $P_2$, ...) frühestens nach einem vorbestimmten Zeitintervall (dT; $dT_1$, $dT_2$) zum Start eines unmittelbar zuvor gestarteten Prozesses ($P_1$, $P_2$, ...) erfolgt.

6. Verfahren nach Anspruch 5, **dadurch gekennzeichnet, dass** die maximale Zeitspanne ($T_{Max}$) größer ist als ein erstes Produkt des vorbestimmten Zeitabstandes (dT) und der Anzahl (N) der Zeitmesser und kleiner als die Summe des ersten Produkts und des vorbestimmten Zeitabstandes (dT):

$$N\ dT < T_{Max} < (N+1)\ dT.$$

7. Verfahren nach mindestens einem der Ansprüche 5 oder 6, **dadurch gekennzeichnet, dass** die minimale Zeitspanne ($T_{min}$) größer oder gleich einem zweiten Produkt des vorbestimmten Zeitabstandes (dT) und der um eins verringerten Anzahl (N) der Zeitmesser ($Z_A$, $Z_B$, $Z_N$) ist:

$$Tmin <= (N\text{-}1)\ dT.$$

**Claims**

1. Method for monitoring a processor system (S) which executes a plurality of processes ($P_1$, $P_2$, ...), **characterized in that** a process ($P_1$, $P_2$, ...) is started after a preceding process ($P_1$, $P_2$, ...) has ended, **in that** one of at least two timers ($Z_A$, $Z_B$, $Z_N$) is restarted in a cyclically permutating manner if one of the processes ($P_1$, $P_2$, ...) is started; and a first error signal is output if a period of time (A1, A3, ..., B0, B2, ...) recorded by one of the timers ($Z_A$, $Z_B$, $Z_N$) exceeds a predetermined maximum period of time ($T_{Max}$), **in that** a recorded period of time (A1, A3, ..., B0, B2, ...) of the timer ($Z_A$, $Z_B$, $Z_N$) is read when a process ($P_1$, $P_2$, ...) ends, which timer is restarted by the next process ($P_1$, $P_2$, ...) to be executed; and a second error signal is output if the recorded period of time (A1, A3, A5, ..., B0, B2, B4, ...) undershoots a predetermined minimum period of time ($T_{min}$).

2. Method according to Claim 1, **characterized in that** a check data item ($X_1$, $X_2$) is transmitted to a started process ($P_1$, $P_2$, ...) for processing; and a third error signal is output, when the process ($P_1$, $P_2$, ...) ends, in response to a deviation of the processed check data item ($Y_1$, $Y_2$) from a desired value ($Y_{Soll1}$, $Y_{Soll2}$).

3. Method according to Claim 2, **characterized in that** a process ($P_1$, $P_2$, ...) is composed of subprocesses ($I_1$, $I_2$, $I_3$), and at least one subprocess ($I_1$, $I_2$, $I_3$)

carries out an operation on the check data item ($X_1$, $X_2$), which operation confirms the execution of this subprocess ($I_1$, $I_2$, $I_3$) in a comprehensible manner by means of the processed check data item ($Y_1$, $Y_2$).

4. Method according to at least one of Claims 2 and 3, at least two subprocesses ($I_1$, $I_2$, $I_3$) carrying out operations ($F_1$, $F_2$, $F_3$), which are non-commutative with respect to one another, on the check data item ($X_1$, $X_2$), with the result that the execution of these subprocesses in the correct order can be confirmed by means of the processed data item.

5. Method according to at least one of the preceding claims, **characterized in that** one of the processes ($P_1$, $P_2$, ...) is started at the earliest after a predetermined interval of time ($dT$; $dT_1$, $dT_2$) with respect to the start of a process ($P_1$, $P_2$, ...) started immediately beforehand.

6. Method according to Claim 5, **characterized in that** the maximum period of time ($T_{Max}$) is greater than a first product of the predetermined interval of time ($dT$) and the number ($N$) of timers and less than the sum of the first product and the predetermined interval of time ($dT$):

$$N\ dT\ <\ T_{Max}\ <\ (N+1)\,dT.$$

7. Method according to at least one of Claims 5 and 6, **characterized in that** the minimum period of time ($T_{min}$) is greater than or equal to a second product of the predetermined interval of time ($dT$) and the number ($N$) of timers ($Z_A$, $Z_B$, $Z_N$) reduced by one:

$$Tmin\ <=\ (N-1)\,dT.$$

**Revendications**

1. Procédé de surveillance d'un système processeur (S) qui exécute plusieurs processus ($P_1$, $P_2$, ...), **caractérisé en ce que**
un processus ($P_1$, $P_2$, ...) est lancé après que le processus précédent ($P_1$, $P_2$, ...) s'est terminé,
**en ce que** par permutation cyclique, l'un parmi au moins deux dispositifs de mesure du temps sont relancés lorsque l'un des processus ($P_1$, $P_2$, ...) est lancé,
**en ce qu'**un premier signal d'erreur est émis si une durée (A1, A3, ..., B0, B2, ...) détectée par l'un des dispositifs ($Z_A$, $Z_B$, $Z_N$) de mesure du temps dépasse une durée maximale prédéterminée ($T_{Max}$),
**en ce que** lorsqu'un processus ($P_1$, $P_2$, ...) est terminé, une durée (A1, A3, ..., B0, B2, ...) saisie par le dispositif ($Z_A$, $Z_B$, $Z_N$) de mesure du temps est lue et le dispositif de mesure du temps est relancé par le processus ($P_1$, $P_2$, ...) exécuté ensuite et
**en ce qu'**un deuxième signal d'erreur est émis si la durée (A1, A3, A5, ..., B0, B2, B4, ...) saisie n'atteint pas une durée minimale prédéterminée ($T_{min}$).

2. Procédé selon la revendication 1, **caractérisé en ce qu'**une donnée de vérification ($X_1$, $X_2$) est transmise à un processus ($P_1$, $P_2$, ...) lancé pour être traitée et **en ce qu'**un troisième signal d'erreur est émis lorsque le processus ($P_1$, $P_2$, ...) est interrompu en réaction à la présence d'un écart entre la donnée de vérification ($Y_1$, $Y_2$) traitée et une valeur de consigne ($Y_{Soll1}$, $Y_{Soll2}$).

3. Procédé selon la revendication 2, **caractérisé en ce qu'**un processus ($P_1$, $P_2$, ...) est constitué de processus partiels ($I_1$, $I_2$, $I_3$) et **en ce qu'**un processus partiel ($I_1$, $I_2$, $I_3$) exécute sur la donnée de vérification ($X_1$, $X_2$) une opération qui confirme que l'exécution de ce processus partiel ($I_1$, $I_2$, $I_3$) est rendue plausible par la donnée de vérification ($Y_1$, $Y_2$) traitée.

4. Procédé selon au moins l'une des revendications 2 ou 3, dans lequel au moins deux processus partiels ($I_1$, $I_2$, $I_3$) exécutent des opérations ($F_1$, $F_2$, $F_3$) non commutatives entre elles sur la donnée de vérification ($X_1$, $X_2$) de telle sorte que l'exécution de ces processus partiels dans la succession correcte peut être confirmée par la donnée traitée.

5. Procédé selon au moins l'une des revendications précédentes, **caractérisé en ce que** le démarrage de l'un des processus ($P_1$, $P_2$, ...) a lieu au plus tôt après un intervalle de temps ($dT$; $dT_1$, $dT_2$) prédéterminé à partir du début du processus ($P_1$, $P_2$, ...) qui a été lancé immédiatement avant.

6. Procédé selon la revendication 5, **caractérisé en ce que** la durée maximale ($T_{Max}$) est supérieure à un premier produit de l'intervalle de temps prédéterminé ($dT$) et du nombre ($N$) de dispositifs de mesure du temps et est inférieure à la somme du premier produit et de l'intervalle de temps prédéterminé ($dT$) :

$$N\ dT\ <\ T_{Max}\ <\ (N+1)\ dT.$$

7. Procédé selon au moins l'une des revendications 5 ou 6, **caractérisé en ce que** la durée minimale ($T_{min}$) est supérieure ou égale à un deuxième produit de l'intervalle de temps prédéterminé ($dT$) et du nombre ($N$) de dispositifs ($Z_A$, $Z_B$, $Z_N$) de mesure du temps diminué de un :

**EP 1 866 714 B1**

Tmin <= (N-1) dT.

Fig. 1

**Fig. 2**

**Fig. 3**

S                                          2

200 ─┤ Start P₁ ├─── 100 ───→ ┤ Neustart Z_A ├─ 250
                                                    ⌐ ⌐ ⌐
                     101                                  ⌐
201 ─┤ Y₁: = f(X₁) ├←─────── ┤ Prüfdatum X₁ auswählen ├─ 251      258
                                                              ⌐
                                                         ┤ B > T_max ? ├

                     102
202 ─┤ Ende P₁ ├─────────→ ┤ Stop Z_B ├─ 252

                                              253
                                   ⟨ Y₁ ≠ Y_soll 1 ? ⟩──ja──→

                                              254
                                   ⟨ B < T_min ? ⟩──ja──→        259

                                                            ┤ Fehler Ausgabe ├

                     110
210 ─┤ Start P₂ ├─── ──→ ┤ Neustart Z_B ├─ 260
                                                    ⌐ ⌐ ⌐
                     111                                  ⌐
211 ─┤ Y₂: = f(X₂) ├←─────── ┤ Prüfdatum X₂ auswählen ├─ 261      268
                                                              ⌐
                                                         ┤ A > T_max ? ├

                     112
212 ─┤ Ende P₂ ├─────────→ ┤ Stop Z_A ├─ 262

                                              263
                                   ⟨ Y₂ ≠ Y_soll 2 ? ⟩──ja──→

                                              264
                                   ⟨ A < T_min ? ⟩──ja──→        269

                                                            ┤ Fehler Ausgabe ├

# Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0663324 A1